## Europäisches Patentamt
## European Patent Office
## Office européen des brevets

(19)

(11) Veröffentlichungsnummer: **0 063 689**
**B1**

(12) **EUROPÄISCHE PATENTSCHRIFT**

(45) Veröffentlichungstag der Patentschrift:
21.08.85

(51) Int. Cl.⁴: **H 04 M 17/02**, G 06 K 13/08

(21) Anmeldenummer: **82102037.7**

(22) Anmeldetag: **13.03.82**

(54) **Wertkartenfernsprecher.**

(30) Priorität: **25.04.81 DE 3116544**

(43) Veröffentlichungstag der Anmeldung:
**03.11.82 Patentblatt 82/44**

(45) Bekanntmachung des Hinweises auf die Patenterteilung:
**21.08.85 Patentblatt 85/34**

(84) Benannte Vertragsstaaten:
**AT CH DE FR GB IT LI NL SE**

(56) Entgegenhaltungen:
GB - A - 2 077 013
US - A - 3 087 018
US - A - 3 448 248
US - A - 4 150 784

(73) Patentinhaber: **International Standard Electric Corporation, 320 Park Avenue, New York New York 10022 (US)**

(84) Benannte Vertragsstaaten: **CH FR GB IT LI NL SE AT**

(73) Patentinhaber: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Hospel, Günter, Torgauer Strasse 47, D-7000 Stuttgart 31 (DE)**
Erfinder: **Ruzic, Hugo, Neuköllner Strasse 2, D-7250 Leonberg (DE)**
Erfinder: **Schneeweiss, Hermann, Jr., Bauernstrasse 42, D-7257 Ditzingen (DE)**

(74) Vertreter: **Thul, Leo, Dipl.-Phys. et al, Kurze Strasse 8 Postfach 300 929, D-7000 Stuttgart 30 (DE)**

**Beschreibung**

Die Erfindung betrifft einen Wertkartenfernsprecher mit einer Eingabe- und Lesevorrichtung, in deren Eingabeschlitz Wertkarten zum Betrieb des Gerätes einschiebbar sind.

Ein solcher Wertkartenfernsprecher ist in der US-A-3 087 018 beschrieben, bei dem die Eingabe der Wertkarten durch einen handbetätigten Hebel erfolgt, der vom Benutzer nach Einschieben der Wertkarte betätigt werden muß, um das Gerät sprechbereit zu machen. Während des Gespräches ist die Wertkarte dem Zugriff des Benutzers entzogen.

Wie sich herausgestellt hat, ist ein solches Fernsprechgerät noch nicht sicher genug gegen betrügerische Handlungen, durch die dem Gerät ein Guthaben vorgetäuscht werden soll, das auf der Wertkarte nicht mehr vorhanden ist. Das Gerät wird z. B. mit Hilfe von an der Wertkarte befestigten Aufbauten oder Leitungen so beeinflußt, daß mit entwerteten Karten noch Gespräche geführt werden können.

Ferner ist aus der US-A-4 150 784 ein Kartenlesegerät bekannt, bei dem die Karteneinführungsöffnung durch einen Schieber verschließbar ist.

Schließlich ist aus der US-A-3 448 248 ein Kartenlesegerät bekannt, mit dem eine gelochte Karte durch Kontaktfedern abgetastet werden kann. Die Karte muß durch den Eingabeschlitz auf einen Tisch geschoben werden, der auf der Unterseite eine kurze Zahnstange aufweist, die mit einem Zahnsegment in Eingriff steht. Letzteres ist auf einer Welle befestigt, die auf der Außenseite des Gehäuses einen Handhebel besitzt. Durch Bewegen dieses Handhebels wird der Tisch mit der Karte relativ zu den Kontaktfedern bewegt, die dabei die Löcher in der Karte elektrisch abtasten.

Der Erfindung liegt die Aufgabe zugrunde, die oben erwähnten Manipulationen auszuschließen und den eingangs genannten Wertkartenfernsprecher so zu verbessern, daß der Gebrauch von Wertkarten mit zusätzlichen Aufbauten und Leitungen unmöglich ist. Gelöst wird diese Aufgabe durch die im Kennzeichen von Anspruch 1 angegebenen Maßnahmen. Den Unteransprüchen sind vorteilhafte Weiterbildungen zu entnehmen. Durch die angegebene Konstruktion kann der Eingabeschlitz so eng gestaltet werden, daß Wertkarten mit Aufbauten nicht eingeführt oder letztere beim Schließen des Schiebers am Eingabeschlitz abgeschert werden. An der Karte befestigte Leitungen werden durch den Schieber abgeschnitten oder letzterer läßt sich, falls es sich um dicke Drähte handelt, nicht schließen, wodurch das Fernsprechgerät weder wähl- noch sprechbereit ist. Weitere Vorteile sind in der Beschreibung angegeben.

Die Erfindung wird an einem Ausführungsbeispiel näher erläutert, das in den Zeichnungen dargestellt ist. Es zeigt

Fig. 1 einen Ausschnitt aus einem Wertkartenfernsprecher mit der erfindungsgemäßen Wertkarteneingabevorrichtung bei geöffnetem Schieber, in Seitenansicht, teilweise geschnitten;

Fig. 2 die Anordnung nach Fig. 1 in Draufsicht, teilweise geschnitten, und

Fig. 3 einen Längsschnitt durch die Anordnung nach Fig. 1 entsprechend der Linie III-III in Fig. 2, jedoch bei geschlossenem Schieber.

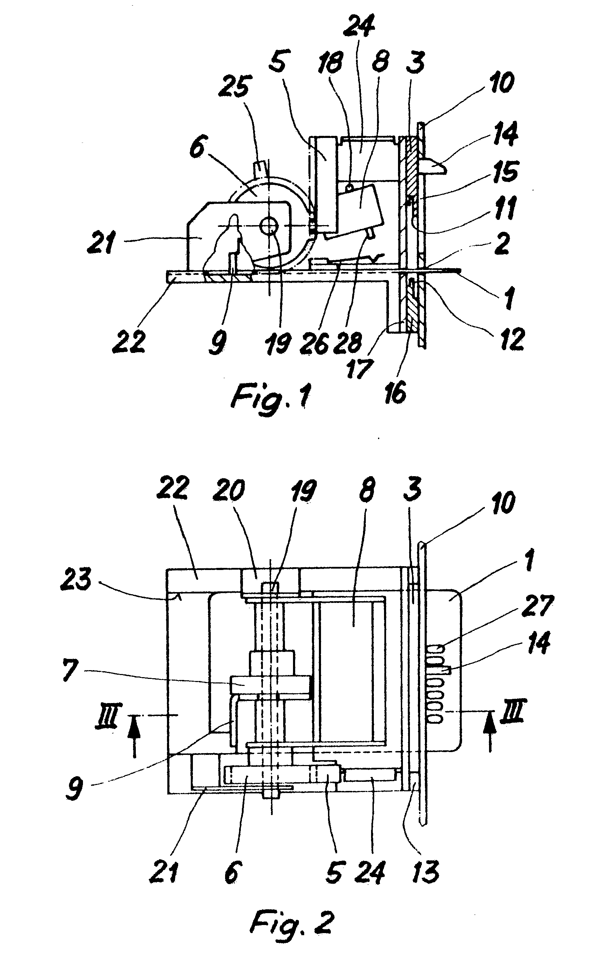

In den Fig. 1 bis 3 ist das Gehäuse 10 des Wertkartenfernsprechers nur so weit angedeutet, wie es für den Einbau der Eingabevorrichtung wichtig ist. Im Gehäuse 10 ist ein waagerechter Eingabeschlitz 2 zum Einführen einer Wertkarte 1 angebracht, der nur geringfügig größer als die Karte ist und deshalb nur den Einschub einer Wertkarte mit bestimmten Abmessungen erlaubt. Ist die Dicke der Karte sehr gering, so ist die Herstellung einer noch dünneren Fälschung kaum möglich. Weil der Eingabeschlitz dann auch sehr schmal ausgeführt werden kann, lassen sich alle dickeren Karten nicht einführen und scheiden für eine mißbräuchliche Benutzung aus.

Hinter der Wand des Gehäuses 10 befindet sich eine Montageplatte 17, die durch zwei parallele Leisten 13 auf Abstand vom Gehäuse gehalten wird. Zwischen Gehäuse und Montageplatte ist ein Schieber 3 angeordnet, der vertikal bewegbar ist, so daß durch ihn der Eingabeschlitz 2 im Gehäuse 10 verschließbar ist. Die beiden Leisten 13 geben dem Schieber 3 die seitliche Führung. Am Schieber ist ein Betätigungsstift oder -griff 14 befestigt, der das Gehäuse 10 durch einen schmalen, vertikalen Schlitz 15 durchsetzt und nach außen vorsteht. Mit seiner Hilfe kann der Schieber 3 nach unten gezogen und damit der Eingabeschlitz 2 verschlossen werden. Die Öffnung erfolgt durch eine nicht dargestellte Feder, die den Schieber nach oben befördert.

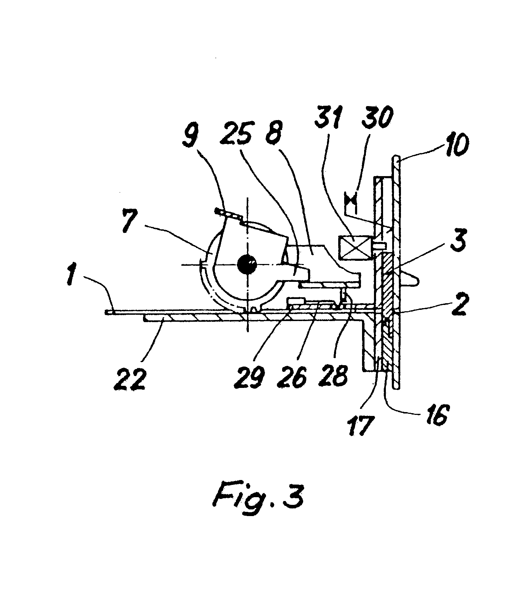

Die Unterkante 11 des Schiebers 3 ist abgestuft ausgestaltet. Das Profil paßt im geschlossenen Zustand des Schiebers (Fig. 3) formschlüssig in die Kante 12 eines feststehenden Gegenstückes 16. Damit bilden die beiden Kanten 11 und 12 die Messer einer Schere, zwischen denen beim Schließen des Schiebers Drähte oder dgl. abgetrennt werden.

Mit dem Schieber 3 ist eine Zahnstange 5 mittels einer Brücke 24 fest verbunden (Fig. 1). Die Brücke durchsetzt die Montageplatte 17 in einem Schlitz und sorgt für den richtigen Abstand der Zahnstange 5 zu einem Zahnrad 6, in das sie eingreift. Das Zahnrad 6 ist auf einer Achse 19 befestigt, die in zwei Lagerböcken 20 und 21 gelagert ist. Letztere werden von einem Winkel 22 getragen, der an die Montageplatte 17 geschraubt ist und der zugleich die Auflage für die Wertkarte 1 bildet. Die Oberseite des langen Schenkels dieses Winkels 22 fluchtet deshalb mit dem Eingabeschlitz 2 im Gehäuse 10 und in der Montageplatte 17, wie die Fig. 1 und 3 erkennen lassen. Vorzugsweise ist die Oberseite des Winkels mit einer breiten, den Abmessungen der Wertkarte 1 angepaßten Nut 23 versehen, so daß die Wertkarte zugleich an ihren Kanten geführt wird. Die Lagerböcke 20 und 21 sitzen beiderseits dieser Kartengleitbahn 23.

Neben dem genannten Zahnrad 6 ist ein weiteres Zahnrad 7 auf der Achse 19 angebracht, dessen Zähnung in die Gleitbahn 23 bzw. Kartenebene eingreift (Fig. 3) und für den Transport einer Wertkarte 1 sorgt, die mit einer entsprechenden Zahnspur ausgestattet ist. Da die Zahnräder 6 und 7 keine volle Umdrehung auszuführen brauchen, genügt es, wenn sie nur auf einem Teil ihres Umfangs verzahnt sind, z. B. auf dem einen Winkel von ungefähr 120° entsprechenden Kreisbogen.

Ferner ist auf der Achse 19 ein Anschlag 9 befestigt, der die Einschubtiefe für die Wertkarte begrenzt. Er steht bei offenem Schieber 3 in Einschubrichtung hinter der Achse 19 auf der Gleitbahn 23 (Fig. 1). Beim Schließen des Schiebers wird er nach oben geschwenkt, wie Fig. 3 zeigt. Außerdem ist auf der Achse 19 noch eine Kontaktiervorrichtung 8 lose gelagert, die aus einem U-förmigen Bügel besteht, dessen freie Enden von den Achslöchern durchsetzt werden und dessen Quersteg vor der Achse 19 liegt. Es wird durch eine (nicht dargestellte) Feder nach oben gegen einen Anschlag 18 gedrückt (Fig. 1). Beim Schließen des Schiebers 3 schwenkt eine an dem Anschlagblech 9 oder an oder neben dem Zahnrad 7 auf der Achse 19 befestigte Mitnehmernase 25 auf den Bügel 8 und drückt ihn nach unten auf einen Satz von auf einer Platte 29 angeordneten Kontaktfedern 26, welche dadurch wiederum mit den Kontaktfeldern 27 der Wertkarte 1 zur Berührung gebracht werden. Diese Stellung ist in Fig. 3 wiedergegeben. Die Kontaktfelder 27 sind aus Fig. 2 ersichtlich. Zweckmäßigerweise ist der Bügel 8 auf der Unterseite mit einer Druckleiste 28 versehen, die auf die Kontaktfedern einwirkt.

Die Stellung des Schiebers 3 wird durch einen in seine Gleitebene ragenden Kontakt 30 überwacht, der in Fig. 3 zu sehen ist. Erst wenn sowohl der Hakenumschalter als auch dieser Kontakt 30 betätigt, d. h. der Schieber 3 ganz geschlossen ist, wird der Sperrmagnet 31 erregt, dessen Sperrstift den Schieber verriegelt, sofern eine ordnungsgemäße Wertkarte 1 eingeführt ist, was durch die Kontaktfedern 26 überwacht wird.

Die Funktionsweise ist folgende: Ein Benutzer findet die Anordnung in der in Fig. 1 und 2 gezeigten Stellung vor, d. h. der Schieber 3 ist oben, der Eingabeschlitz 2 offen. In diesen wird die Wertkarte 1 geschoben bis sie am Anschlag 9 anstößt. Die Kontaktfelder 27 stehen dabei außen vor. Dann wird der Schieber 3 nach unten gezogen, wobei die Zahnstange 5 über das Zahnrad 6 die Achse 19 in Umdrehung versetzt. Dadurch wird der Anschlag 9 von der Kante der Wertkarte weggeschwenkt, das Zahnrad 7 greift in die Zähnung der Wertkarte 1 und zieht diese ins Gerät. Die Mitnehmernase 25 drückt die Kontaktiervorrichtung 8 gegen die Wertkarte, wobei die Kontaktfedern 26 deren Kontakte 27 berühren. Diese Endstellung bei geschlossenem Schieber zeigt Fig. 3. Die Kontaktfedern 26 prüfen Anwesenheit und Guthaben auf der Wertkarte, der Kontakt 30 den geschlossenen Schieber, der durch den Sperrmagnet 31 verriegelt wird. Bei ausgehängtem Handapparat kann nun gewählt werden.

Durch Einhängen des Handapparates (Betätigen des Gabelumschalters) oder nach Verbrauch des Guthabens der Wertkarte wird der Sperrmagnet 31 stromlos, der entriegelte Schieber 3 wird durch Federkraft nach oben und die Wertkarte 1 durch das Zahnrad 7 so weit aus dem Eingabeschlitz 2 befördert, daß sie ergriffen und herausgezogen werden kann (Fig. 1 und 2). Ein Mißbrauch ist so gut wie ausgeschlossen, da eine mit Hilfsaufbauten versehene Wertkarte nicht einschiebbar ist, ohne daß die Aufbauten am Eingabeschlitz 2 in der Gehäusewand 10, in der Montageplatte 17 oder an der Platte 29 hängen bleiben. Sind statt Aufbauten Leitungen an den Kontaktfeldern 27 angelötet, die dann aus dem Eingabeschlitz herausgeführt sind, so werden diese beim Schließen des Schiebers 3 durchgetrennt. Läßt sich aus irgendeinem Grund der Schieber nicht ganz schließen, ist das Gerät nicht betriebsbereit.

Bei einer anderen, nicht dargestellten Ausführung ist die Kontaktiervorrichtung 8 nicht schwenkbar auf der Achse 19 gelagert, sondern direkt am Schieber 3 befestigt und wird mit diesem linear gegen die Kontaktfedern 26 bewegt. Die Nase 25 entfällt bei dieser Ausführung. Alle übrigen Teile und Funktionsabläufe sind unverändert wie zuvor beschrieben.

**Patentansprüche**

1. Wertkartenfernsprecher mit einer Eingabe- und Lesevorrichtung, in deren Eingabeschlitz (2) Wertkarten (1) zum Betrieb des Gerätes einschiebbar sind, dadurch gekennzeichnet, daß der Eingabeschlitz durch einen Schieber (3) verschließbar ist, der bei eingeschobener Wertkarte im geschlossenen Zustand durch einen Sperrmagnet (31) verriegelbar ist, wobei an dem Schieber (3) eine Zahnstange (5) angebracht ist, die mit einem Zahnrad (6) zusammenwirkt, das mit einem weiteren Zahnrad (7) durch eine Achse (19) verbunden ist, das in die Zähnung einer eingeschobenen Wertkarte (1) eingreift und diese beim Schließen des Schiebers (3) ins Gehäuse (10) und beim Öffnen teilweise aus dem Gehäuse transportiert.

2. Wertkartenfernsprecher nach Anspruch 1, dadurch gekennzeichnet, daß mit dem Schieber (3) eine Kontaktiervorrichtung verbunden ist, die beim Schließen des Schiebers auf die Kontakte (27) einer Wertkarte (1) abgesenkt wird.

3. Wertkartenfernsprecher nach Anspruch 1, dadurch gekennzeichnet, daß mit den Zahnrädern (6, 7) eine Kontaktiervorrichtung (8) gekuppelt ist, die beim Schließen des Schiebers (3) auf die Kontakte (27) einer Wertkarte (1) geschwenkt wird.

4. Wertkartenfernsprecher nach Anspruch 2 oder 3, dadurch gekennzeichnet, daß die Kontaktiervorrichtung (8) auf Kontaktfedern (26) wirkt, die auf einer Platte (29) unmittelbar über der Gleitbahn (23) für die Wertkarten (1) angebracht sind und mit deren Kontaktfeldern (27) in Eingriff bringbar sind.

5. Wertkartenfernsprecher nach Anspruch 3 und 4, dadurch gekennzeichnet, daß die Kontaktiervorrichtung (8) von einem U-förmigen Bügel gebildet wird, dessen freie Schenkel von der Achse (19) durchsetzt werden und dessen Quersteg die Kontaktfedern (26) betätigt.

6. Wertkartenfernsprecher nach Anspruch 5, dadurch gekennzeichnet, daß mit den Zahnrädern (6, 7) eine Mitnehmernase (25) verbunden ist, die auf den lose gelagerten,durch eine Feder rückstellbaren Bügel wirkt.

7. Wertkartenfernsprecher nach einem der vorhergehenden Ansprüche, dadurch gekennzeichnet, daß der Schieber (3) zwischen der Wand des Gehäuses (10) und einer Montageplatte (17) gelagert ist.

8. Wertkartenfernsprecher nach Anspruch 7, dadurch gekennzeichnet, daß die Unterkante (11) des Schiebers (3) abgestuft ist und im geschlossenen Zustand formschlüssig in die Kante (12) eines feststehenden Messers (16) eingreift.

9. Wertkartenfernsprecher nach einem der vorhergehenden Ansprüche, dadurch gekennzeichnet, daß die Zahnräder (6, 7) und die Kontaktfedern (26) von einem Winkel (22) getragen werden, in dessen Oberseite die Gleitbahn (23) für die Wertkarten (1) vertieft angeordnet ist und mit dem Eingabeschlitz (2) in Gehäuse (10) und Montageplatte (17) fluchtet.

10. Wertkartenfernsprecher nach einem der vorhergehenden Ansprüche, dadurch gekennzeichnet, daß mit den Zahnrädern (6, 7) ein Anschlag (9) verbunden ist, der bei geöffnetem Schieber (3) auf der Gleitbahn (23) für Wertkarten (1) steht und beim Schließen des Schiebers aus der Gleitbahn geschwenkt wird.

## Claims

1. Card telephone comprising an input and reading device into the input slot (2) of which cards (1) for operating the telephone are capable of being inserted, characterised in that the input slot is capable of being closed by a slide (3) which, in its closed state and with a card inserted, is capable of being locked by a stopper magnet (31), there being attached to said slide (3) a toothed rack (5) which cooperates with a pinion (6) and which, by a shaft (19), is in connection with a further pinion (7) engaging into the perforation of an inserted card (1) and transports said card (1) into said housing (10) when said slide (3) is closed, and partly out of said housing (10) when said slide (3) is opened.

2. A card telephone as claimed in claim 1, characterised in that said slide (3) is in connection with a contacting device which, upon closing said slide (3), is lowered onto the contacts (27) of a card (1).

3. A card telephone as claimed in claim 1, characterised in that to said pinions (6, 7) there is coupled a contacting device (8) which, upon the closing of said slide (3), is swivelled onto said contacts (27) of a card (1).

4. A card telephone as claimed in claim 2 or 3, characterised in that said contacting device (8) acts upon contact springs (26) which are arranged on a board (29) directly above the slideway (23) for said cards (1) and are capable of being brought into engagement with the contact fields (27) of said cards (1).

5. A card telephone as claimed in claims 3 and 4; characterised in that said contacting device (8) is formed by a U-shaped member whose free legs are traversed by said shaft (19) and whose cross-piece actuates said contact springs (26).

6. A card telephone as claimed in claim 5, characterised in that said pinions (6, 7) are each connected to a driver (25) acting upon the loosely supported U-shaped member which is capable of being reset by the action of a spring.

7. A card telephone as claimed in any one of the preceding claims, characterised in that said slide (3) is supported between the wall of said housing (10) and a mounting panel (17).

8. A card telephone as claimed in claim 7, characterised in that the bottom edge (11) of said slide (3) is stepped and, in the closed state of said slide, engages positively the edge (12) of a stationary knife (16).

9. A card telephone as claimed in any one of the preceding claims, characterised in that said pinions (6, 7) and said contact springs (26) are supported by a bracket (22) in whose surface the slideway (23) for said cards (1) is recessed and is flush with said card slot (2) in both said housing (10) and said mounting panel (17).

10. A card telephone as claimed in any one of the preceding claims, characterised in that said pinions (6, 7) are in connection with a limit stop (9) which, in the open state of said slide (3), is applied to said slideway (23) for said cards (1) and is swivelled out of said slideway (23) upon the closing of said slide (3).

## Revendications

1. Téléphone à carte de paiement avec dispositif d'entrée et de lecture, dans la fente d'introduction (2) duquel des cartes (1) peuvent être insérées pour faire fonctionner l'appareil, caractérisé en ce que la fente d'introduction peut être verrouillée par un coulisseau (3) qui est verrouillié par un solénoïde de verrouillage (31) lorsqu'il est en position de fermeture et qu'une carte est introduite, en ce qu'une crémaillère (5) est montée sur le coulisseau (3) et engrène avec une roue dentée (6) reliée par un axe (19) à une autre roue dentée (7) engrenant avec la denture d'une carte (1) introduite et assurant à la fermeture du coulisseau (3) le transport dans le boîtier (10) et à l'ouverture une sortie partielle du boîtier.

2. Téléphone à carte selon la revendication 1, caractérisé en ce qu'est relié au coulisseau (3) un dispositif de contact qui est abaissé sur les contacts (27) d'une carte (1) à la fermeture du coulisseau.

3. Téléphone à carte selon la revendication 1, caractérisé en ce qu'est couplé aux roues dentées (6, 7) un dispositif de contact (8) qui est basculé sur les contacts (27) d'une carte (1) à la fermeture du coulisseau (3).

4. Téléphone à carte selon la revendication 2 ou 3, caractérisé en ce que le dispositif de contact (8) agit sur des ressorts de contact (26) disposés sur une plaque (29) immédiatement au-dessus de la piste (23) des cartes (1) et pouvant entrer en contact avec les zones de contact (27).

5. Téléphone à carte selon les revendications 3 et 4, caractérisé en ce que le dispositif de contact (8) est formé d'un étrier en forme de U dont les ailes sont traversées par l'axe (19) et dont la traverse actionne les ressorts de contact (26).

6. Téléphone à carte selon la revendication 5, caractérisé en ce que les roues dentées (6, 7) sont reliées à un nez d'entraînement (25) agissant sur l'étrier monté fou et pouvant être rappelé par un ressort.

7. Téléphone à carte selon l'une des revendications précédentes, caractérisé en ce que le coulisseau (3) est monté entre la paroi du boîtier (10) et une platine de montage (17).

8. Téléphone à carte selon la revendication 7, caractérisé en ce que le bord inférieur (11) du coulisseau (3) présente un décrochement qui s'engage en formant un liaison par obstacle dans le bord (12) d'un couteau fixe (16) en position de fermeture.

9. Téléphone à carte selon l'une des revendications précédentes, caractérisé en ce que les roues dentées (6, 7) et les ressorts de contact (26) sont supportés par une cornière (22) dans la face supérieure de laquelle est ménagée en creux la piste (23) des cartes (1) et qui est montée affleurante à la fente d'introduction (2) dans le boîtier (10) et dans la platine de montage (17).

10. Téléphone à carte selon l'une des revendications précédentes, caractérisé en ce que les roues dentées (6, 7) sont reliées à une butée (9) qui repose sur la piste (23) des cartes (1) lorsque le coulisseau (3) est ouvert et qui est escamotée lorsque le coulisseau est fermé.

0 063 689

Fig. 1

Fig. 2

7

Fig. 3